# EUROPÄISCHE PATENTANMELDUNG

(11) **EP 3 686 889 A1**
(43) Veröffentlichungstag der Anmeldung: **29.07.2020**
(21) Anmeldenummer: 19153779.4
(22) Anmeldetag: 25.01.2019
(51) Int. Cl.: G10L 21/0264, G10L 21/0216, G10L 15/22

(54) **VERFAHREN ZUR SPRACHERKENNUNG UND SPRACHERKENNUNGSSYSTEM**

(71) Anmelder: Siemens Aktiengesellschaft, 80333 München (DE)
(72) Erfinder: Jöhnßen, Oliver, 91058 Erlangen (DE); Krüger, Daniel, 91126 Rednitzhembach (DE); Kubo, Florian, 97727 Fuchsstadt (DE)

(57) **Zusammenfassung**

Die Erfindung betrifft ein Verfahren zur Spracherkennung, wobei die gesprochene Sprache aus einem Sprachsignal (SS) erkannt wird und automatisiert als Sprach-Daten (SD) einer Steuerungsanlage (SA) zur Steuerung einer technischen Vorrichtung (TV) zur Verfügung gestellt werden, und wobei die gesprochene Sprache in einem Umfeld mit Umgebungsgeräuschen (UG) aus Störsignalen (StS) ausgesprochen wird und mittels eines sich im Umfeld befindlichen Aufnahmegerätes (MIC) als Aufnahmesignal (AS) aufgenommen wird, wobei das Aufnahmesignal (AS) eine Überlagerung aus dem Sprachsignal (SS) und den Störsignalen (StS) aufweist, wobei mit einer Simulation eines digitalen Zwillings (DT) der Steuerungsanlage (SA) für die technische Vorrichtung (TV) die zukünftigen Störsignale (StS_{z}) der Umgebungsgeräusche (UG) und deren zeitliches Auftreten als Vorhersagesignal (VS) vorhergesagt werden, wobei das Vorhersagesignal (VS) invertiert wird und zu dem Aufnahmesignal (AS) addiert wird, wodurch die Störsignale (StS) weitestgehend ausgelöscht werden und nun mit einem kompensierten Sprachsignal (SS") die Sprach-Daten (SD) erzeugt werden.

## Beschreibung

Die Erfindung betrifft ein Verfahren zur Spracherkennung, wobei die gesprochene Sprache aus einem Sprachsignal erkannt wird und automatisiert als Sprach-Daten einer Steuerungsanlage zur Steuerung einer technischen Vorrichtung zur Verfügung gestellt werden und wobei die gesprochene Sprache in einem Umfeld mit Umgebungsgeräuschen aus Störsignalen ausgesprochen wird und mittels eines sich im Umfeld befindlichen Aufnahmegerätes als Aufnahmesignal aufgenommen wird, wobei das Aufnahmesignal eine Überlagerung aus dem Sprachsignal und dem Störsignalen aufweist.

Verfahren zur Spracherkennung oder eine Sprachinteraktion mit Computern ist in der Informatik schon seit mehreren Jahrzehnten bekannt. Die Spracherkennung oder auch die automatische Spracherkennung werden eingesetzt für Verfahren, die Automaten, insbesondere Computern, die gesprochene Sprache der automatischen Datenerfassung zugänglich machen. Mittlerweile stehen bereits für das häusliche Umfeld Lösungen zur Verfügung, z.B. Google Home, Amazon Echo "Alexa", Nuance Dragon Speech, Apple "Siri". Eine Sprachinteraktion mit Maschinen im Umfeld der industriellen Fertigung ist aber aufgrund der fertigungsbedingten Umgebungsgeräusche deutlich anspruchsvoller. Die Umgebungsgeräusche sind u.U. sehr laut, dementsprechend hat das Störsignal eine hohe Amplitude. Die Störgeräusche können azyklisch auftreten und sind nicht monoton, d.h. der Zeitpunkt des Auftretens ist unbekannt. Die Störgeräusche können von überall herkommen, keine einheitliche Richtung.

Insbesondere in der Fertigungsindustrie können Geräusche wie Brummen von Vibrationen eines Antriebsmotors, Zischen eines Pneumatikventils, Klackern von Vibrationswendelförderern, Klirren von Fertigungsprodukten, wie Rohrleitungen, Störgeräusche von Aufzügen, Hebebühnen und Hallenkränen usw. auftreten.

Um also eine Spracherkennung in der industriellen Fertigung einsetzen zu können, wird ein effektives Verfahren zur Trennung eines Nutz-/Sprachsignals von Störgeräuschsignalen benötigt.

Demnach ist es eine Aufgabe der Erfindung ein Verfahren, insbesondere für die Fertigungsindustrie, bereitzustellen, welches es ermöglicht in einem industriellen Umfeld mit Umgebungsgeräuschen die Sprache eines Sprechers sicher zu erkennen und daraus Maschinenbefehle abzuleiten.

Die Aufgabe wird für das eingangs genannte Verfahren zur Spracherkennung dadurch gelöst, dass mit einer Simulation eines digitalen Zwillings der Steuerungsanlage für die technische Vorrichtung die zukünftigen Störsignale der Umgebungsgeräusche und deren zeitliches Auftreten als Vorhersagesignal vorhergesagt werden, wobei das Vorhersagesignal invertiert wird und zu dem Aufnahmesignal addiert wird, wodurch die Störsignale weitestgehend ausgelöscht werden und nun mit einem kompensierten Sprachsignal die Sprach-Daten erzeugt werden. Als wesentlich wird es für die Erfindung daher angesehen, eine Vorhersage der Geräuschentwicklung einer Maschine auf Grundlage ihres digitalen Zwillings (simulationsfähiges Computermodel) zu generieren.

Im Sinne der Erfindung wird unter einem digitalen Zwilling folgendes verstanden. Ein digitaler Zwilling ist eine digitale Version einer Maschine oder einer technischen Vorrichtung. Einmal erstellt, kann der digitale Zwilling verwendet werden, um die Maschine bzw. deren Steuerungsanlage zur Steuerung der Maschine oder der technischen Vorrichtung in einer digitalen Darstellung eines realen Systems darzustellen. Der digitale Zwilling wird so erstellt, dass er in Form und Verhalten der entsprechenden Maschine identisch ist. Darüber hinaus spiegelt der digitale Zwilling den Status der Maschine bzw. deren Steuerungsanlage in einem größeren Verbund wieder. Z.B. können Sensoren an der Maschine angeordnet sein, um Echtzeitdaten (oder nahezu Echtzeitdaten) von physischen Objekten zu erfassen, welche zu einem digitalen Zwilling geleitet werden. Der digitale Zwilling kann dann alle erforderlichen Änderungen vornehmen, um eine Übereinstimmung mit dem physischen Zwilling aufrecht zu erhalten.

Ein digitaler Zwilling repräsentiert ein reales Objekt in der digitalen Welt, insbesondere in der Welt der Industrie 4.0. Es kann sich um materielle oder immaterielle Objekte handeln. Die digitalen Zwillinge sind aus Daten und Algorithmen aufgebaut und können über Sensoren mit der realen Welt gekoppelt sein. Für die Prozesse in der Industrie 4.0 stellen digitale Zwillinge bereits heute eine entscheidende Basis dar. Der digitale Zwilling ist entlang der gesamten Wertschöpfungskette realisierbar.

In einer weiteren Ausgestaltung der Erfindung verwendet in dem Verfahren der digitale Zwilling ein Umfeld-Model, und in dem Umfeld-Model sind Geräuschsignaturen der technischen Vorrichtung hinterlegt, wobei den Geräusch Signaturen auf der Basis eines realen Betriebes der Steuerungsanlage die entsprechenden realen Zustände zugeordnet sind und bei der Simulation des digitalen Zwillings der Steuerungsanlage für die technische Vorrichtung, anhand der durch die Simulation erhaltenen simulierten Zustände der Steuerungsanlage, die hinterlegten Geräuschsignaturen zur Bildung des Vorhersagesignals verwendet werden. Im Sinne der Erfindung wird unter den Zuständen ein Prozessabbild von Eingängen und Ausgängen der Prozessvariablen verstanden. Die simulierten Zustände sind demnach die Zustände der Prozessvariablen in der nahen Zukunft für die Hauptszenarien der Maschine. Demnach hat man nun ein Verfahren zur Vorhersage der Geräuschentwicklung einer Maschine mit Hilfe eines digitalen Zwillings auf Basis aktueller Prozesswerte und auf Basis simulierter Prozesswerte für die wahrscheinlichsten Szenarien der Anlage geschaffen.

Weiterhin kann man das Verfahren verbessern, wenn für das Umfeld-Model ein oder mehrere der folgenden Parameter genutzt werden:
- Geometrische Aufbau der technischen Vorrichtung mit seinen Komponenten,
- Position von Geräuschimitierenden Komponenten,
- spezifische Geräuschsignaturen der Komponenten in Abhängigkeit ihres Betriebszustandes.

In ein derartiges Umfeld-Model fließen demnach folgende Informationen ein:
- Geometrische Aufbau der Maschine (z.B. Lage der geräuschimitierenden Komponenten),
- spezifische Geräuschsignaturen einzelner Komponenten bzw. Module in Abhängigkeit ihres Betriebszustandes (Drehzahlen, Lastmomente, Luftdruck).

Die Ermittlung der Geräuschsignaturen erfolgt vorzugsweise experimentell durch einmalig durchzuführende Kalibrierläufe der Maschine, wobei der imitierte Schall jeder Komponente in verschiedenen Betriebszuständen mit Messmikrofonen aufgezeichnet wird. Ebenso muss dem Umfeld-Model das Steuerungsprogramm mit seinen Prozessvariablen der Maschine bekannt sein. Im gesonderten KI-Baugruppen (künstliche Intelligenz) mit Simulations-Software der Anlage (digitaler Zwilling) kann die Berechnung von Prozessvariablen in der nahen Zukunft für die Hauptszenarien der Maschine wie z.B. bei der Produktion, häufigste vorkommende Störung, Auslastung und Geschwindigkeit der Maschine durchgeführt werden. Auch kann in das Umfeld-Model der Betriebszustand und der Verschleißzustand aller Maschinenkomponente zu jedem Zeitpunkt deterministisch durch die Steuerungsprogramme und predictive maintenance Parameter festgelegt werden. So kann man mit dem Verfahren die zustandsabhängigen Geräuschsignaturen in einem zeitlich sehr engen Rahmen simulativ vorhersagen.

Als weitere Optimierung für die Spracherkennung kann bei dem Verfahren eine Datenbank mit Geräuschen, welche von der technischen Vorrichtung unabhängig sind, genutzt werden, wobei diese Geräusche folgende umfassen:
- Fahrgeräusche von Transportfahrzeugen,
- Motorgeräusche von Transportfahrzeugen,
- Ladegeräusche oder Klappergeräusche von Fertigungsteilen.

Diese Datenbank kann lokal (an einem PC in der Leitwarte) oder Remote (in Edge- oder Cloud-Servern) gespeichert und aktualisiert werden. Diese Datenbank kann als Basis für weitere Fertigungsbranchen genutzt und die relevanten Störgeräusche können aktiviert/deaktiviert werden (z.B. Klappern von gefertigten Rohren wird für die Prozessindustrie abgewählt, das Brummen einer Hochleistungspumpe aktiviert). So kann jede Branche ihre eigene Vergleichs-Simulationshalle per Klick "generieren".

Die eingangs genannte Aufgabe wird ebenso auch ein Spracherkennungssystem zum Bereitstellen von Sprachdaten für eine Steuerungsanlage zur Steuerung einer technischen Vorrichtung gelöst. Das Spracherkennungssystem weist ein Aufnahmegerät zum Erfassen eines Aufnahmesignals auf, wobei das Aufnahmesignal eine Überlagerung aus einem Sprachsignal und einem Störsignal aufweist, weiterhin ein Erkennungsmittel vorhanden ist, welches aus dem Sprachsignal die Sprachdaten erzeugt, wobei das Spracherkennungssystem folgendes umfasst:
- eine Simulationsplattform mit einem digitalen Zwilling der Steuerungsanlage für die technische Vorrichtung,
- eine Prognoseeinheit zur Vorhersage von zukünftigen Störsignalen und deren zeitliches Auftreten als Vorhersagesignal,
- eine Kompensationseinheit, welche ausgestaltet ist, das Vorhersagesignal zu invertieren und zu dem Aufnahmesignal zu addieren, und dadurch ein kompensiertes Sprachsignal zur Verfügung zu stellen,
wobei das Erkennungsmittel weiter dazu ausgestaltet ist, mit dem kompensierten Sprachsignal die Sprachdaten zu erzeugen, weiterhin steht die Simulationsplattform mit der Prognoseeinheit in Verbindung und ist ausgestaltet, dass durch die Simulation bereitgestellte simulierte Zustände der Prognoseeinheit zur Verfügung gestellt werden.

In einer weiteren Ausgestaltung weist das Spracherkennungssystem ein Umfeld-Model auf, in welchem Geräuschsignaturen der technischen Vorrichtung hinterlegt sind, wobei den Geräuschsignaturen auf der Basis eines realen Betriebes der Steuerungsanlage entsprechende reale Zustände zugeordnet sind, wobei das Umfeld-Model weiterhin dazu ausgestaltet ist, bei der Simulation des digitalen Zwillings der Steuerungsanlage für die technische Vorrichtung, anhand der durch die Simulation erhaltenen simulierten Zustände der Steuerungsanlage, die hinterlegten Geräuschsignaturen zur Bildung des Vorhersagesignals für die Kompensationseinheit bereitzustellen.

Das Umfeld-Model weist ein oder mehrere der folgenden Parameter auf:
- geometrischer Aufbau der technischen Vorrichtung mit seinen Komponenten,
- Position von geräuschemittierenden Komponenten,
- spezifische Geräuschsignaturen der Komponenten in Abhängigkeit ihres Betriebszustandes.

Auch ist es sinnvoll eine Datenbank mit Geräuschen einzubinden, wobei die Geräusche von der technischen Vorrichtung unabhängig sind, und diese Geräusche folgende sind:
- Fahrgeräusche von Transportfahrzeugen,
- Motorgeräusche von Transportfahrzeugen,
- Ladegeräusche oder
- Klappergeräusche von Fertigungsteilen.

Mit der Zeichnung wird ein Ausführungsbeispiel der Erfindung beschrieben. Es zeigt:
- FIG 1: ein Spracherkennungssystem im Umfeld einer Steuerungsanlage für eine technische Vorrichtung,
- FIG 2: prinzipielle Signalverläufe von einem Aufnahmesignal, einem Vorhersagesignal und dem daraus resultierenden kompensierten Sprachsignal,
- FIG 3: ein Umfeld-Model und
- FIG 4: eine tabellarische Ansammlung von Geräuschsignaturen.

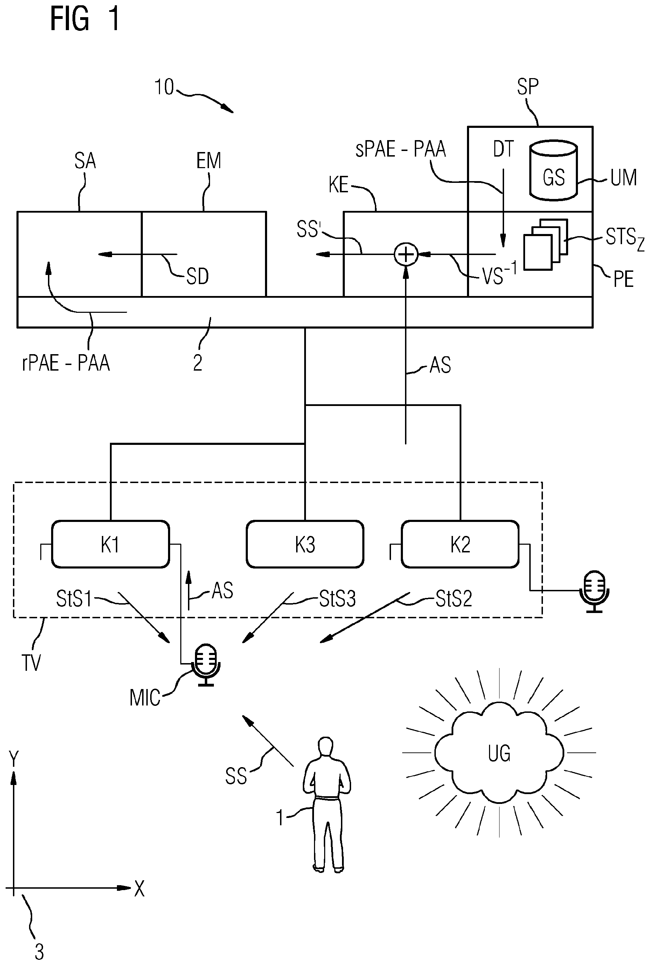

Gemäß FIG 1 ist eine technische Vorrichtung TV, welche durch eine Steuerungsanlage SA gesteuert wird, dargestellt. Die Steuerungsanlage SA ist zusammen mit einem Spracherkennungssystem 10 an einer Leitebene 2 angeschlossen. An die Leitebene 2 ist über einen Feldbus die technische Vorrichtung TV mit einer ersten Komponente K1, einer zweiten Komponente K2 und einer dritten Komponente K3 angeschlossen. Die Komponenten K1,K2,K3 erzeugen im Betrieb der technischen Vorrichtung TV entsprechende Störsignale SGS. Demnach imitiert die erste Komponente K1 ein erstes Störsignal StS1, die zweite Komponente K2 ein zweites Störsignal StS2 und die dritte Komponente K3 ein drittes Störsignal StS3. Die Störsignale STS und sonstige Geräusche können zusammengefasst als Umgebungsgeräusche UG genannt werden.

Ein Bediener 1, welcher beispielsweise vor der ersten Komponente K1 steht und per Sprachsignal SS die Maschine bedienen will, steht nun vor dem Problem, dass die Umgebungsgeräusche UG sein Sprachsignal SS verfälschen. Ein Aufnahmegerät MIC zum Erfassen eines Aufnahmesignals AS ist an der ersten Komponente K1 angeschlossen und demnach mit dem Spracherkennungssystem 10 über die Leitebene 2 verbunden. Das Aufnahmesignal AS ist eine Überlagerung aus dem Sprachsignal SS des Bedieners 1 und den Störsignalen StS1,StS2,StS3. Das Spracherkennungssystem 10 ist ausgestaltet, zum Bereitstellen von Sprachdaten SD für die Steuerungsanlage SA zur Steuerung der technischen Vorrichtung TV. Das Spracherkennungssystem 10 weist weiterhin ein Erkennungsmittel EM auf, welches aus dem Sprachsignal SS die Sprachdaten SD erzeugt. Um der Steuerungsanlage SA nun Sprachdaten SD zur Verfügung zu stellen, welche weitestgehend befreit von Störsignalen StS1,StS2,StS3 sind, weist das Spracherkennungssystem 10 eine Simulationsplattform SP mit einem digitalen Zwilling DT der Steuerungsanlage SA für die technische Vorrichtung TV auf. Eine Prognoseeinheit PE dient zur Vorhersage von zukünftigen Störsignalen StS_{z} und deren zeitliches Auftreten als Vorhersagesignal VS. Eine Kompensationseinheit KE ist ausgestaltet, das Vorhersagesignal VS zu invertieren und zu dem Aufnahmesignal AS zu addieren, und dadurch ein kompensiertes Sprachsignal SS' zur Verfügung zu stellen. Das kompensierte Sprachsignal SS' wird dem Erkennungsmittel EM zur Verfügung gestellt, dabei ist das Erkennungsmittel EM dazu ausgestaltet, mit dem kompensierten Sprachsignal SS' die Sprachdaten SD zu erzeugen. Die Simulationsplattform SP steht mit der Prognoseeinheit PE in Verbindung und ist ausgestaltet, dass durch die Simulation bereitgestellte simulierten Zustände sPAE-PAA der Prognoseeinheit PE für die Vorhersage zur Verfügung gestellt werden.

Das Spracherkennungssystem 10 ist derart ausgestaltet, dass der digitale Zwilling DT ein Umfeld-Model UM nutzt. In diesem Umfeld-Model UM sind Geräuschsignaturen GS der technischen Vorrichtung TV hinterlegt. Die Geräuschsignaturen GS sind auf der Basis eines realen Betriebes der Steuerungsanlage SA aufgenommen worden und entsprechend realen Zuständen r-PAE-PAA und sind diesen auch zugeordnet. Das Umfeld-Model UM ist weiterhin dazu ausgestaltet, bei der Simulation des digitalen Zwillings DT der Steuerungsanlage SA für die technische Vorrichtung TV anhand der durch die Simulation erhaltenen simulierten Zustände sPAE-PAA der Steuerungsanlage SA, die hinterlegten Geräuschsignaturen GS zur Bildung des Vorhersagesignals VS für die Kompensationseinheit KE bereitzustellen.

Weiterhin ist dem Umfeld-Model UM ein geometrischer Aufbau der technischen Vorrichtung TV mit seinen Komponenten K1,K2,K3 durch Positionsangaben X,Y mit Hilfe eines Koordinatensystems 3 bekannt. Verfahrensgemäß wird nun die gesprochene Sprache des Bedieners 1 als Sprachsignal SS auf das Aufnahmegerät MIC treffen, aber auch die Störsignale StS1,StS2,StS3 der Umgebungsgeräusche UG treffen auf das Aufnahmegerät MIC, daraus resultiert dann das Aufnahmesignal AS. Die gesprochene Sprache wird als in einem Umfeld mit Umgebungsgeräuschen UG aus Störsignalen SGS ausgesprochen und mittels des sich im Umfeld befindlichen Aufnahmegerätes MIC als Aufnahmesignal AS aufgenommen. Das Aufnahmesignal AS ist demnach eine Überlagerung aus Sprachsignal SS und den Störsignalen StS. Mit der Simulation des digitalen Zwillings DT der Steuerungsanlage SA für die technische Vorrichtung TV werden zukünftige Störsignale StS_{z} der Umgebungsgeräusche UG und deren zeitliches Auftreten als das Vorhersagesignal VS vorhergesagt.

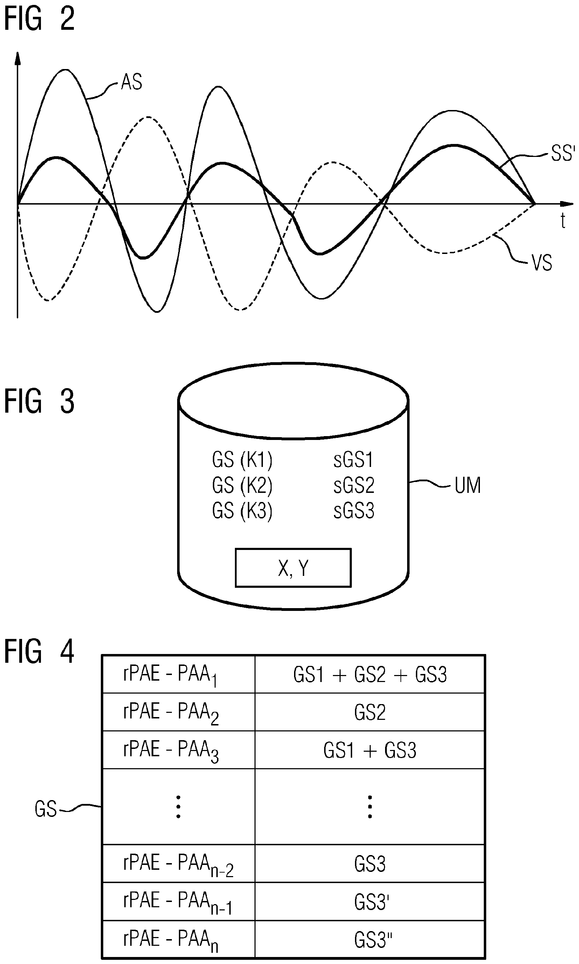

FIG 2 zeigt einen Signalverlauf des Aufnahmesignals AS, des Vorhersagesignals VS und des kompensierten Sprachsignals SS'. Eine einfache Addition des Aufnahmesignals AS zu dem invertierten Vorhersagesignal VS⁻¹ ergibt das kompensierte Sprachsignal SS'.

Um dies zu erreichen, werden in dem Umfeld-Model UM hinterlegten Geräuschsignaturen GS mit den entsprechend zugeordneten realen Zuständen rPAE-PAA mit den simulierten Zuständen sPAE-PAA der Steuerungsanlage SA verglichen und die hinterlegten Geräuschsignaturen GS werden zur Bildung des Vorhersagesignals VS genutzt.

FIG 3 zeigt exemplarisch das Umfeld-Model UM in denen die Geräuschsignaturen GS (K1) der entsprechenden Komponenten K1,K2,K3 hinterlegt sind. Neben den Koordinaten X,Y der Komponenten K1,K2,K3 sind auch weiterhin spezifische Geräuschsignaturen SGS1,SGS2,SGS3 in den Umfeld-Model UM hinterlegt.

Die FIG 4 zeigt eine mögliche beispielhafte Hinterlegung von Geräuschsignaturen GS zu realen Prozesszuständen rPAE-PAA. Dem realen ersten Prozesszustand rPAE-PAA₁ sind die Geräuschsignaturen GS1,GS2,GS3 zugeordnet. Einem nächsten zweiten realen Prozesszustand rPAE-PAA₂ ist nur für diesen Betrieb die Geräuschsignatur GS2 zugeordnet. Würde aber in dem Model mit den Geräuschsignaturen GS nun der dritte reale Prozesszustand rPAE-PAA₃ als Simulationswert sPAE-PAA₃ auftreten, so würden in diesem Prozesszustand beispielsweise die Geräuschsignaturen GS1 und GS3 zu hören sein. Die Tabelle setzt sich entsprechend bis zur n-ten Geräuschsignatur rPAE-PAAₙ fort.

## Patentansprüche

1. Verfahren zur Spracherkennung,
wobei die gesprochene Sprache aus einem Sprachsignal (SS) erkannt wird und automatisiert als Sprach-Daten (SD) einer Steuerungsanlage (SA) zur Steuerung einer technischen Vorrichtung (TV) zur Verfügung gestellt werden, und wobei die gesprochene Sprache in einem Umfeld mit Umgebungsgeräuschen (UG) aus Störsignalen (StS) ausgesprochen wird und mittels eines sich im Umfeld befindlichen Aufnahmegerätes (MIC) als Aufnahmesignal (AS) aufgenommen wird, wobei das Aufnahmesignal (AS) eine Überlagerung aus dem Sprachsignal (SS) und den Störsignalen (StS) aufweist,
**dadurch gekennzeichnet, dass** mit einer Simulation eines digitalen Zwillings (DT) der Steuerungsanlage (SA) für die technische Vorrichtung (TV) die zukünftigen Störsignale (StS_{z}) der Umgebungsgeräusche (UG) und deren zeitliches Auftreten als Vorhersagesignal (VS) vorhergesagt werden, wobei das Vorhersagesignal (VS) invertiert wird und zu dem Aufnahmesignal (AS) addiert wird, wodurch die Störsignale (StS) weitestgehend ausgelöscht werden und nun mit einem kompensierten Sprachsignal (SS') die Sprach-Daten (SD) erzeugt werden.

2. Verfahren nach Anspruch 1, wobei der digitale Zwilling (DT) ein Umfeld-Model (UM) verwendet, und in dem Umfeld-Model (UM) Geräuschsignaturen (GS) der technischen Vorrichtung (TV) hinterlegt sind, wobei den Geräuschsignaturen (GS) auf der Basis eines realen Betreibers der Steuerungsanlage die entsprechenden realen Zustände (rPAE-PAA) zugeordnet sind und bei der Simulation des digitalen Zwillings (DT) der Steuerungsanlage (SA) für die technische Vorrichtung (TV), anhand der durch die Simulation erhaltenen simulierten Zustände (sPAE-PAA) der Steuerungsanlage (SA), die hinterlegten Geräuschsignaturen (GS) zur Bildung des Vorhersagesignals (VS) verwendet werden.

3. Verfahren nach Anspruch 2, wobei für das Umfeld-Model (UM) ein oder mehrere der folgenden Parameter genutzt werden:
- geometrischer Aufbau der technischen Vorrichtung (TV) mit seinen Komponenten (K1,K2,K3),
- Position (x,y) von geräuschemittierenden Komponenten (K1,K2),
- spezifische Geräuschsignaturen (SGS) der Komponenten (K1,K2,K3) in Abhängigkeit ihres Betriebszustands.

4. Verfahren nach Anspruch 2 oder 3, wobei die Geräuschsignaturen (GS) experimentell durch durchzuführende Kalibrierläufe der Komponenten (K1,K2,K3) ermittelt werden, wobei der emittierte Schall der Komponente (K1,K2,K3) in verschiedenen Betriebszuständen mit Messmikrofonen aufgezeichnet wird.

5. Verfahren nach einem der Ansprüche 1 bis 4, wobei eine Datenbank mit Geräuschen, welche von der technischen Vorrichtung (TV) unabhängig sind, genutzt wird, wobei diese Geräusche folgende sind:
- Fahrgeräusche von Transportfahrzeugen,
- Motorgeräusche von Transportfahrzeugen,
- Ladegeräusche oder
- Klappergeräusche von Fertigungsteilen.

6. Spracherkennungssystem (10) zum Bereitstellen von Sprach-Daten (SD) für eine Steuerungsanlage (SA) zur Steuerung einer technischen Vorrichtung (TV), umfassend
ein Aufnahmegerät (MIC) zum Erfassen eines Aufnahmesignals (AS), wobei das Aufnahmesignal (AS) eine Überlagerung aus einem Sprachsignal (SS) und einem Störsignal (StS) aufweist, ein Erkennungsmittel (EM), welches aus dem Sprachsignal (SS) die Sprach-Daten (SD) erzeugt,
**gekennzeichnet, durch**
- eine Simulationsplattform (SP) mit einem digitalen Zwilling (DT) der Steuerungsanlage (SA) für die technische Vorrichtung (TV),
- eine Prognoseeinheit (PE) zur Vorhersage von zukünftigen Störsignalen (StSz) und deren zeitliches Auftreten als Vorhersagesignal (VS),
- eine Kompensationseinheit (KE), welche ausgestaltet ist, das Vorhersagesignal (VS) zu invertieren und zu dem Aufnahmesignal (AS) zu addieren, und dadurch ein kompensiertes Sprachsignal (SS') zur Verfügung zu stellen,
- wobei die Erkennungsmittel (EM) weiterhin dazu ausgestaltet sind mit dem kompensierten Sprachsignal (SS') die Sprach-Daten (SD) zu erzeugen,
wobei die Simulationsplattform (SP) mit der Prognoseeinheit derart in Verbindung steht und ausgestaltet ist, dass durch die Simulation bereitgestellte simulierte Zustände (sPAE-PAA) der Prognoseeinheit (PE) zur Verfügung gestellt werden.

7. Spracherkennungssystem (10) nach Anspruch 6,
mit einem Umfeld-Model (UM), in welchem Geräuschsignaturen (GS) der technischen Vorrichtung (TV) hinterlegt sind, wobei den Geräuschsignaturen (GS) auf der Basis eines realen Betriebes der Steuerungsanlage (SA) entsprechende reale Zustände (rPAE-PAA) zugeordnet sind, wobei das Umfeld-Model (UM) weiterhin dazu ausgestaltet ist, bei der Simulation des digitalen Zwillings (DT) der Steuerungsanlage (SA) für die technische Vorrichtung (TV), anhand der durch die Simulation erhaltenen simulierten Zustände (sPAE-PAA) der Steuerungsanlage (SA), die hinterlegten Geräuschsignaturen (GS) zur Bildung des Vorhersagesignals (VS) für die Kompensationseinheit (KE) bereit zu stellen.

8. Spracherkennungssystem (10) nach Anspruch 7, wobei das Umfeld-Model (UM) ein oder mehrere der folgenden Parameter aufweist:
- geometrischer Aufbau der technischen Vorrichtung (TV) mit seinen Komponenten (K1,K2,K3),
- Position (x,y) von geräuschemittierenden Komponenten ((K1,K2,K3),
- spezifische Geräuschsignaturen der Komponenten ((K1,K2,K3) in Abhängigkeit ihres Betriebszustands.

9. Spracherkennungssystem (10) nach Anspruch 7, mit einer Datenbank (DB) mit Geräuschen, welche von der technischen Vorrichtung (TV) unabhängig sind, wobei diese Geräusche folgende sind:
- Fahrgeräusche von Transportfahrzeugen,
- Motorgeräusche von Transportfahrzeugen,
- Ladegeräusche oder
- Klappergeräusche von Fertigungsteilen.
